# EUROPEAN PATENT APPLICATION

(11) **EP 4 841 596 A1**
(43) Date of publication of application: **18.11.2026**
(21) Application number: 25176860.2
(22) Date of filing: 16.05.2025
(51) Int. Cl.: G07C 9/00

(54) **APPARATUS, METHOD AND COMPUTER PROGRAM FOR A VEHICLE FOR TRIGGERING A VEHICLE FUNCTIONALIYT USING A MACHINE LEARNING MODEL**

(71) Applicant: Bayerische Motoren Werke Aktiengesellschaft, 80809 München (DE)
(72) Inventor: Kombas, Khaled, 80933 München (DE); Heidmann, Fanny, 80796 München (DE)

(57) **Abstract**

The present disclosure relates to an apparatus, a method, and a computer program for a vehicle, and to a vehicle comprising such an apparatus. The apparatus (10) comprises interface circuitry (12) for obtaining sensor data of at least one localization sensor (20a-d, 30a-b, 40), the sensor data being indicative of a location of a key device of a user of the vehicle relative to the vehicle, and processor circuitry (14) configured to process the sensor data or data derived from the sensor data using a machine learning model to output a prediction on whether a vehicle functionality is to be triggered, trigger the vehicle functionality based on the prediction, obtain feedback from the user on whether the vehicle functionality was to be triggered given the sensor data processed by the machine learning model, and re-train at least a portion of the machine learning model or train a second machine learning model based on the sensor data or data derived from the sensor data and the feedback.

## Description

The present disclosure relates to an apparatus, a method, and a computer program for a vehicle, and to a vehicle comprising such an apparatus.

Machine learning models used in car access systems often rely on the accurate localization of the user's position or trajectory, typically represented by the localization of the digital key. The models are pre-trained with known user behavior and usage, also known as labeled data sets.

Under certain environmental conditions (e.g., electromagnetic interferences, signal reflection, extreme weather, lighting variations, etc.), the accuracy of input data sources (UWB (Ultra-Wideband)/BLE (Bluetooth Low Energy) signal, camera data, GPS (Global Positioning System) signal, etc.) may be compromised, resulting in diminished performance of the localization algorithm. Additionally, the precision of the algorithms or models used for the car access system is susceptible to variations in user behavior and usage patterns. Different users may exhibit the same trajectories or movements while having different intents. For example, one user may want to trigger a certain action in the car (e.g., unlocking the car) when he or she is at a given position or trajectory relative to the car, while another might not want to trigger the functionality.

There may be a demand for an improved concept for triggering actions based on sensor data representing the location of a user relative to a vehicle.

This demand is addressed by the subject matter of the appended claims.

Embodiments are based on the finding that the behavior of the user (e.g., driver) of a vehicle can be monitored locally in the vehicle, in order to improve the operation of machine learning models being used to trigger vehicle functionality (e.g., automatic locking or unlocking, activation of lights towards the feet of the user, opening of the trunk lid). When the user gives implicit feedback (by taking an action that is different from an action or non-action predicted by the machine learning model) or explicit feedback (e.g., using a voice assistant, or in response to a prompt from the vehicle), this feedback can be used to improve the machine learning model(s) being used to predict whether vehicle functionality is to be triggered given the location (or trajectory, which is based on a sequence of locations) of a key device of the user. The proposed concept provides a mechanism for fast, fully autonomous, and data-protecting retraining of a (user-specific) model, to ensure that the system remains responsive to individual usage patterns.

Some examples of the present disclosure relate to an apparatus for a vehicle. The apparatus comprises interface circuitry for obtaining sensor data of at least one localization sensor. The sensor data is indicative of a location of a key device of a user of the vehicle relative to the vehicle. The apparatus comprises processor circuitry configured to process the sensor data or data derived from the sensor data using a machine learning model to output a prediction on whether a vehicle functionality is to be triggered. The processor circuitry is configured to trigger the vehicle functionality based on the prediction. The processor circuitry is configured to obtain feedback from the user on whether the vehicle functionality was to be triggered given the sensor data processed by the machine learning model. The processor circuitry is configured to re-train at least a portion of the machine learning model or train a second machine learning model based on the sensor data or data derived from the sensor data and the feedback. By obtaining the sensor data, processing it with a machine learning model, and retraining the model based on user feedback on whether the vehicle functionality was to be triggered given the sensor data, a mechanism is provided that learns user preferences and improves the accuracy of automated vehicle functionality triggering, enhancing user experience and convenience.

In some examples, at least a portion of the feedback is based on the user manually activating or deactivating the vehicle functionality contrary to the prediction of the machine learning model. The inclusion of manual override feedback allows the system to learn from instances where the prediction was incorrect, refining the machine learning model and improving its predictive accuracy over time.

In some cases, even if the prediction of the machine learning model is incorrect, the user might not bother to manually activate or deactivate the vehicle functionality contrary to the prediction of the machine learning model, for example, if the user is too busy with other tasks or is unaware of the machine learning model's prediction. To also cover such cases, the user may be prompted (e.g., when the machine learning model outputs a prediction with a level of certainty that is lower than a threshold) as to whether the prediction was correct. Thus, the processor circuitry may be configured to prompt the user to provide feedback on the prediction. At least a portion of the feedback may be based on a response from the user to the prompt. Prompting the user for feedback ensures consistent data collection, improving the quality and reliability of the training data used to refine the machine learning model.

In various examples, the machine learning model is a neural network. A neural network is a computational model inspired by the structure and function of biological neural networks in the human brain. It comprises interconnected nodes, or neurons, organized in layers, which process information to recognize patterns and solve problems.

In some examples of the proposed concept, the processor circuitry may be configured to re-train a subset of layers of the machine learning model (i.e., of the neural network) based on the feedback. Retraining only a subset of layers of the neural network reduces computational cost and training time while still allowing the model to adapt to new feedback, improving efficiency.

In particular, the layer(s) may be re-trained (i.e., fine-tuned) based on the feedback given by a specific user. For example, the subset of layers may be one or more user-specific or key device-specific layers of the machine learning model, with the remaining layers being user-agnostic layers of the machine learning model. Utilizing user/key-specific layers allows the model to personalize its predictions for each user or key device, improving accuracy without affecting the general performance of the model.

In particular, the subset of layers may be trained specifically based on feedback associated with a user or key device of the user of the vehicle. The processor circuitry may be configured to train separate layer(s) for the users or key devices of the vehicle. Training separate layers for each user or key device enables highly personalized predictions, maximizing the accuracy of automated vehicle functionality triggering for each individual.

A similar approach may be taken when two separate models are used. For example, the second machine learning model may be a neural network. The processor circuitry may be configured to train one or more layers of the second machine learning model (i.e., of the neural network) based on the feedback. For example, the second machine learning model may be operated in sequence with the machine learning model. Training a second machine learning model allows for a more flexible approach to learning, capturing complex relationships in the feedback data that are specific to a user or key device.

Similar to the approach with a single model utilizing user- or key device-specific layers, when two machine learning models are used, the user- or key device-specific layers may be moved to the second machine learning model, which is specific to the user or key device. In other words, the (first) machine learning model may be a user-agnostic machine learning model and the second machine learning model may be a user-specific or key device-specific machine learning model. Combining a user-agnostic model with a user-specific model allows for leveraging general knowledge (which can be used for all users) while also adapting to individual user preferences, improving both accuracy and personalization.

Thus, the one or more layers may be trained specifically based on feedback associated with a user or key device of the user of the vehicle, with the processor circuitry being configured to train separate one or more layers for the users or key devices of the vehicle. Training separate layers for each user or key device enables highly personalized predictions, maximizing the accuracy of automated vehicle functionality triggering for each individual.

In some cases, users may drive different vehicles (e.g., of a multi-vehicle household, of a fleet of company vehicles, or of a rental fleet), or may switch to a new vehicle after selling or discarding a previous vehicle. The learned user behavior may be taken and re-used in this case. For example, the processor circuitry may be configured to upload the one or more trained layers to a backend server, and/or to download the one or more layers from the backend server prior to training. Uploading and downloading trained layers enables use and improvement of the machine learning model or second machine learning model across vehicles.

There are various types of machine learning algorithms that can be used to re-train (i.e., fine-tune) the machine learning model or second machine learning model. For example, reinforcement learning may be used. Reinforcement learning is a type of machine learning where an agent learns to make decisions within an environment to maximize a reward. It learns through trial and error, receiving feedback in the form of rewards or penalties for its actions. For example, the processor circuitry may be configured to continuously re-train the machine learning model or train the second machine learning model using reinforcement learning, with the feedback being used to calculate the reward (with negative reward being a penalty) for the reinforcement learning. For example, if the user disagrees with the prediction, the reward may be lower or negative; if the user agrees with the prediction, the reward may be larger or positive. Utilizing reinforcement learning allows the system to learn through trial and error, optimizing its predictions based on the received feedback and maximizing the reward.

Alternatively, supervised learning may be used. Supervised learning is a type of machine learning where an algorithm learns from labeled data, meaning each data point has an input and a desired output. The algorithm then makes predictions on new, unseen data based on the patterns it learned from the labeled examples. For example, the processor circuitry may be configured to continuously re-train the machine-learning model or train the second machine learning model using supervised learning, with the feedback being used to determine labels to use for the supervised learning. Utilizing supervised learning with user feedback as labels allows the system to learn from labeled data, improving the accuracy and reliability of its predictions.

The re-trained machine-learning model and/or trained second machine learning model may then be used in place of the machine learning model(s) used previously to output the prediction on whether the vehicle functionality is to be triggered. In other words, the processor circuitry may be configured to, after training the machine learning model or the second machine learning model, process subsequently obtained sensor data or data derived from the subsequently obtained sensor data using one of the re-trained machine learning model or the second machine learning model to determine the prediction. Processing subsequent sensor data with the retrained model ensures that the system continuously adapts to user preferences and improves its predictive accuracy over time.

There are various types of sensor data that can be used to determine the location of the key device relative to the vehicle. For example, the sensor data may comprise sensor data from a short-range communication transceiver, such as sensor data from an Ultra-WideBand transceiver or sensor data from a Bluetooth transceiver. Utilizing short-range communication transceiver data provides accurate and reliable localization information, improving the accuracy of the machine learning model.

Alternatively, or additionally, other types of localization sensors may be used. For example, the sensor data may comprise sensor data from a satellite-based positioning sensor. Additionally, or alternatively, the sensor data may comprise sensor data from a camera sensor. Using sensor data from satellite-based positioning sensors and camera sensors, for example, in combination with each other or with the short-range communication transceiver sensor data, provides a comprehensive and accurate localization solution, improving the robustness of the system.

In some examples, a single location of the key device relative to the vehicle suffices for the prediction. For example, the processor circuitry may be configured to process the sensor data to determine the location of the key device relative to the vehicle. The machine learning model may be trained to output the prediction based on the location of the key device relative to the vehicle. Training the machine learning model based on the location of the key device relative to the vehicle allows the system to accurately predict user intent based on single locations and trigger vehicle functionality accordingly.

To improve the prediction, the trajectory, i.e., a sequence of multiple locations, or a vector representing the location and direction of movement, relative to the vehicle may be used to enable more accurate predictions. For example, the processor circuitry may be configured to process the sensor data to determine a trajectory of the key device relative to the vehicle. The machine learning model is trained to output the prediction based on the trajectory of the key device relative to the vehicle. Training the machine learning model based on the trajectory of the key device relative to the vehicle allows the system to more accurately determine the user's intent, and to anticipate user actions and proactively trigger vehicle functionality, enhancing user experience.

Some examples of the present disclosure relate to a vehicle comprising the above apparatus. Integrating the apparatus into a vehicle provides a seamless and automated user experience, enhancing convenience and safety.

Some examples of the present disclosure relate to a method for a vehicle. The method comprises obtaining sensor data of at least one localization sensor. The sensor data is indicative of a location of a key device of a user of the vehicle relative to the vehicle. The method comprises processing the sensor data or data derived from the sensor data using a machine learning model to output a prediction on whether a vehicle functionality is to be triggered. The method comprises triggering the vehicle functionality based on the prediction. The method comprises obtaining feedback from the user on whether the vehicle functionality was to be triggered given the sensor data processed by the machine learning model. The method comprises re-training at least a portion of the machine learning model or training a second machine learning model based on the sensor data or data derived from the sensor data and the feedback. The method provides a mechanism for continuously improving the accuracy and reliability of automated vehicle functionality triggering, enhancing user experience and safety.

Some examples of the present disclosure relate to a computer program having a program code for performing the method, when the computer program is executed on a computer, a processor, or a programmable hardware component. Providing a computer program allows for easy implementation and deployment of the method on various computing platforms, facilitating widespread adoption and innovation.

Some examples of apparatuses, methods and/or computer programs will be described in the following by way of example only, and with reference to the accompanying figures, in which
- Fig. 1: shows a schematic diagram of an apparatus for a vehicle and of a vehicle comprising such an apparatus; and
- Fig. 2: shows a flow chart of a method for a vehicle.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

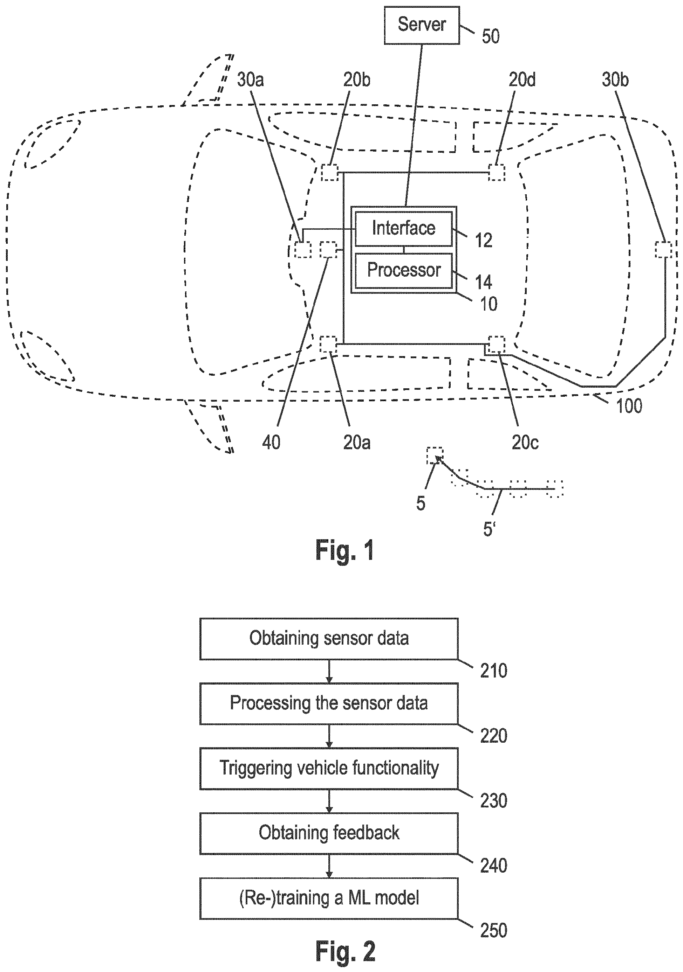

Fig. 1 shows a schematic diagram of an apparatus 10 for a vehicle 100 and of a vehicle 100 comprising such an apparatus 10. The apparatus 10 comprises interface circuitry 12 and processor circuitry 14, which are coupled. For example, the processor circuitry 14 is configured to provide the functionality of the apparatus 10, in conjunction with the interface circuitry 12 (for exchanging data with components inside or outside the vehicle 100, such as short-range communication transceivers 20a-d, cameras 30a, 30b, a satellite-based positioning system-based localization sensor 40, or a remote server). For example, the processor circuitry 14 may be configured to execute machine-readable instructions to provide its functionality. For example, the machine-readable instructions may be stored in memory or storage of the apparatus 10.

The vehicle 100 of Fig. 1 is shown with a number of different localization sensors for determining the location (or trajectory 5') of a key device 5 of a user of the vehicle relative to the vehicle. The processor circuitry 14 is configured to obtain sensor data from at least one of the localization sensors, via the interface circuitry 12. The sensor data is indicative of a location (and/or trajectory 5a) of the key device 5 of the user of the vehicle relative to the vehicle 100.

For example, the short-range communication transceivers 20a-d (e.g., UWB transceivers or BLE transceivers) may be used as localization sensors. Accordingly, the sensor data may comprise sensor data from a short-range communication transceiver 20a-20d, such as sensor data from an Ultra-WideBand transceiver or sensor data from a Bluetooth transceiver. Short-range communication transceivers, such as UWB transceivers, can be used to determine the location of a key device relative to a vehicle by measuring the time of flight of radio signals between the key device and multiple short-range communication transceivers 20a-20d being used as anchor points on the vehicle. The processor circuitry may be configured to convert the time of flight into a distance, and to use trilateration or multilateration techniques with distances from several anchor points, to determine the location of the key device relative to the vehicle.

Additionally, camera sensors 30a, 30b (e.g., at the front and rear of the vehicle) may be used to track the user (and therefore the key device 5). Accordingly, the sensor data may comprise sensor data from a camera sensor. For example, the processor circuitry may be configured to process image sensor data from the camera sensors 30a, 30b to correlate the position of the key device with the position of the user, as shown in the image data. Furthermore, the sensor data may comprise sensor data from a satellite-based positioning sensor 40. This way, the sensor data not only shows the position of the key device relative to the vehicle, but also the absolute position of the vehicle and key device.

This sensor data is used to determine the location and/or the key device relative to the vehicle, and optionally, if sensor data of a satellite-based positioning sensor 40 is available, with respect to world coordinates. In some examples, this is done by a machine-learning model that uses the location of the key device to determine actions to be performed. Alternatively, the location (and/or trajectory) of the key device may be determined beforehand and then provided to the machine learning model. Thus, the processor circuitry may be configured to process the sensor data to determine the location of the key device relative to the vehicle. Additionally, or alternatively, the processor circuitry may be configured to process the sensor data to determine a trajectory of the key device relative to the vehicle (e.g., using a sequence of locations of the key device).

The processor circuitry 14 then processes the location/trajectory or the sensor data indicative of the location/trajectory to output a prediction on whether a vehicle functionality is to be triggered. For example, in the context of keyless car access, the vehicle functionality to be triggered may be locking the doors, unlocking the doors, opening the trunk lid, closing the trunk lid, or opening the charging door. However, other vehicle functionality may also be triggered. For example, in the dark, the vehicle functionality being triggered (or not) may relate to the illumination of the ground surface in front of at least one of the doors or trunk. Another vehicle functionality being triggered may relate to the cooling or heating of the vehicle, or a start of de-frosting of the windshield when the user approaches the vehicle.

In the proposed concept, a machine learning model is used to predict, based on the sensor data or data derived from the sensor data (e.g., location/trajectory of the key device), whether a vehicle functionality is to be triggered. Machine learning refers to algorithms and statistical models that computer systems may use to perform a specific task without using explicit instructions, instead relying on models and inference. For example, in machine learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included in the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

In the proposed concept, the machine learning model uses the sensor data or the data derived from the sensor data (location/trajectory of the key device) as input, and outputs the prediction of whether a vehicle functionality is to be triggered. For example, the machine learning model may output a vector or other kind of data structure of binary values or integer/floating-point values that indicate whether a vehicle functionality is to be triggered. For example, each binary or integer/floating-point value may indicate whether a vehicle functionality is to be triggered or not. For example, if a value is a binary 1, the vehicle functionality is to be triggered; if it is 0, it is not to be triggered. For example, if the integer/floating-point value is above a certain threshold, the vehicle functionality is to be triggered; if it is below, it is not to be triggered.

Depending on the kind of value being output by the machine learning model (binary, integer, float), different types of training may be used. In the following, a short introduction to training is given.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values; i.e., each training sample is associated with a desired output value. By specifying both training samples and desired output values, the machine-learning model "learns" which output value to provide based on an input sample that is similar to the samples provided during the training. Supervised learning may be based on a supervised learning algorithm, e.g., a classification algorithm, a regression algorithm, or a similarity learning algorithm. Classification algorithms may be used when the outputs are restricted to a limited set of values; i.e., the input is classified to one of the limited set of values. Regression algorithms may be used when the outputs may have any numerical value (within a range). Similarity learning algorithms are similar to both classification and regression algorithms, but are based on learning from examples using a similarity function that measures how similar or related two objects are.

For example, a classification algorithm may be used for training the machine learning model if the output of the machine learning model is a binary value. A regression algorithm may be used if the output of the machine learning model is an integer or floating point value.

Reinforcement learning is another machine-learning algorithm that may be used for the proposed concept. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such that the cumulative reward is increased, leading to software agents that become better at the task they are given (as evidenced by increasing rewards).

In the proposed concept, the machine learning model reacts to the sensor data (or data derived from the sensor data) and outputs whether a vehicle functionality is to be triggered. Thus, the sensor data provides the environment, and the actions being taken (or not) are the vehicle functions that are triggered or not.

The proposed mechanism is used to improve the prediction performance of the apparatus, by collecting feedback from the user and using the feedback to improve the machine learning model (e.g., by re-training the machine learning model or by combining the machine learning model with a second machine learning model). Thus, the processor circuitry 14 is configured to trigger the vehicle functionality based on the prediction, and to obtain feedback from the user on whether the vehicle functionality was to be triggered given the sensor data processed by the machine learning model.

Different types of feedback may be used for this purpose. For example, at least a portion of the feedback may be based on the user manually activating or deactivating the vehicle functionality contrary to the prediction of the machine learning model. In other words, the processor circuitry may be configured to monitor the operation of the vehicle by the user, and to collect (implicit) feedback when the user activates vehicle functionality that the machine learning model predicted not to activate, or when the user deactivates vehicle functionality that was activated based on the prediction of the machine learning model. Additionally, or alternatively, explicit feedback may be sought from the user. For example, the processor circuitry 14 may be configured to prompt the user (e.g., via a voice-based interface, via a display of the vehicle, or via the user's smartphone or smartwatch) to provide feedback on the prediction. In this case, at least a portion of the feedback may be based on a response of the user to the prompt.

The processor circuitry is then configured to re-train at least a portion of the machine learning model or train a second machine learning model based on the sensor data or data derived from the sensor data and the feedback. Two cases are distinguished here-in the first case, one or more layers of the machine-learning model are re-trained (assuming that the machine learning model is a neural network). In the second case, the machine learning model is combined with another machine learning model (the second machine learning model) that is operated in sequence with the machine learning model (e.g., that takes the output of the machine learning model as input or that pre-processes the input of the machine learning model).

In the first case, the processor circuitry is configured to re-train a subset of layers, e.g., the output layer and one or more layers adjacent to the output layer, of the machine learning model based on the feedback. These layer(s) are trained based on the sensor data that are indicative of the location of the key device 5 and the corresponding feedback. In other words, the subset of layers are trained specifically based on feedback associated with a user or key device of the user of the vehicle. Thus, these layers are one or more user-specific or key device-specific layers of the machine learning model, with the remaining layers being user-agnostic layers of the machine learning model. For example, the processor circuitry may be configured to train separate one or more layers for the users or key devices of the users of the vehicle.

Alternatively, the machine learning model may be used in combination (e.g., in sequence) with the second machine learning model. For example, assuming the second machine learning model is a neural network, the processor circuitry may be configured to train one or more layers of the second machine learning model (e.g., the entire second machine learning model) based on the feedback. In this case, the entire second machine learning model may be a user-specific or key device-specific machine learning model, and the machine learning model may be a user-agnostic machine learning model. Accordingly, the one or more layers may be trained specifically based on feedback associated with a user or key device of the vehicle's user, with the processor circuitry being configured to train separate one or more layers for the users or key devices of the vehicle's users.

Training of the respective machine learning model (i.e., the layer(s)) may be performed using supervised learning and/or reinforcement learning. For example, the processor circuitry may be configured to continuously (e.g., after each prediction for which feedback is obtained, periodically after a time period, or after a pre-defined amount of feedback has been gathered, or when the vehicle is charging) re-train the machine-learning model or train the second machine learning model using reinforcement learning. During training, the feedback is converted into the reward for the reinforcement learning algorithm, with feedback indicating agreement with the prediction leading to a higher or positive reward, and with feedback indicating disagreement with the prediction (e.g., as the user activates or deactivates the vehicle function contrary to the model's prediction) leading to a lower or negative reward. Thus, the feedback may be used to calculate the reward for the reinforcement learning.

Alternatively, or additionally, supervised learning may be used. For example, the processor circuitry may be configured to continuously (e.g., after each prediction for which feedback is obtained, periodically after a time period, or after a pre-defined amount of feedback has been gathered, or when the vehicle is charging) re-train the machine-learning model or train the second machine learning model using supervised learning. In this case, the feedback may be used to determine labels to use for the supervised learning. For example, the processor circuitry may be configured to determine a positive label (e.g., binary 1, a high integer value, or floating point 1.0) if a vehicle function is to be activated and a negative label (e.g., binary 0, a low integer value, such as 0, or floating point 0.0) if the vehicle function is to be deactivated according to the feedback. This label may be used as desired output (for the respective entry in the vector or data structure) for the supervised learning-based training of the respective machine learning model or layer(s) thereof.

In some cases, a user may have access to multiple vehicles of the same manufacturer (e.g., concurrently or sequentially). The trained layer(s) may be synchronized with a backend server, so that the user's preference can be used in any of these vehicles. Thus, the processor circuitry 14 may be configured to upload the one or more trained layers to a backend server, and/or to download the one or more layers from the backend server prior to training.

After re-training the machine learning model and/or training the second machine learning model, the newly trained model may be used for processing the sensor data. Thus, the processor circuitry may be configured to, after training the machine learning model or the second machine learning model, process subsequently obtained sensor data or data derived from the subsequently obtained sensor data using one of the re-trained machine learning model or the second machine learning model (in combination with the machine learning model) to determine the prediction.

The interface circuitry 12 corresponds to one or more inputs and/or outputs designed to receive and/or transmit information. This information can be in digital (bit) values according to a specified code, whether exchanged within a module, between different modules, or even between modules of distinct entities. For example, the interface circuitry 12 may include interface circuitry configured to handle the reception and/or transmission of such information.

For example, the processor circuitry 14 can be implemented using one or more processing units, processing devices, or any means for processing, such as a processor, a computer, or a programmable hardware component equipped with appropriately adapted software. Thus, the described function of the processor circuitry 14 can be executed in software, running on one or more programmable hardware components. Such components may include a general-purpose processor, a Digital Signal Processor (DSP), a microcontroller, and more.

More details and aspects of the apparatus 10 and vehicle 100 are mentioned in connection with the proposed concept or one or more examples described above or below (e.g. Fig. 2). The apparatus 10 and vehicle 100 may comprise one or more additional optional features corresponding to one or more aspects of the proposed concept or one or more examples described above or below.

Fig. 2 shows a flow chart of a corresponding method for a vehicle, e.g., for the vehicle 100 of Fig. 1. For example, the method may be performed by the vehicle 100, e.g., by the apparatus 10 of the vehicle 100. Features introduced in connection with the vehicle 100 and the apparatus 10 may likewise be included in the corresponding method.

The method comprises obtaining 210 sensor data of (e.g., from) at least one localization sensor. The sensor data is indicative of a location of a key device of a user of the vehicle relative to the vehicle. The method comprises processing 220 the sensor data or data derived from the sensor data using a machine learning model to output a prediction on whether a vehicle functionality is to be triggered. The method comprises triggering 230 the vehicle functionality based on the prediction. The method comprises obtaining 240 feedback from the user on whether the vehicle functionality was to be triggered given the sensor data processed by the machine learning model. The method comprises re-training 250 at least a portion of the machine learning model or training 250 a second machine learning model based on the sensor data or data derived from the sensor data and the feedback.

More details and aspects of the method are mentioned in connection with the proposed concept or one or more examples described above or below (e.g. Fig. 1). The method may comprise one or more additional optional features corresponding to one or more aspects of the proposed concept or one or more examples described above or below.

In the following, an example implementation of the proposed concept is provided, providing self-improving car access algorithms using the digital key infrastructure.

The proposed concept may provide a hybrid approach, combining active learning and reinforcement learning to improve the performance of the machine learning model automatically.

Active Learning: When the machine learning model is deployed and utilized by customers, it is equipped with the capability to collect implicit and explicit feedback from users. Whenever the model's predicted action does not align with the actual user's intent, the model can either observe user corrections and adjust its future predictions by identifying patterns in the sensor data (implicit feedback) or prompt the user to provide the correct action using the RKE (Remote Keyless Entry) interface of the digital key (explicit feedback). This user feedback can then be incorporated into the model's training data, enabling the model to learn from its mistakes and improve its performance over time.

Reinforcement Learning: In addition to, or as an alternative to, the active learning approach, a reinforcement learning mechanism can be implemented to enable the model to improve its performance autonomously. A reward function can be defined to evaluate the model's performance based on factors such as the accuracy of the predicted action and user intent, the deviation from the actual position of the digital key, and the user's feedback. During the model's deployment, the reinforcement learning algorithm can continuously monitor the model's performance and adjust its internal parameters to increase or maximize the reward function. This allows the model to adapt to the changing environmental conditions and enhance its predictions without the need for manual intervention.

In various examples, the machine learning model may be made user specific. For example, two users may have the same trajectories, while only one wants to charge, and the other does not. When making a user-specific model, reinforcement model learning over time is a suitable mechanism for fast, fully autonomous, and data-protecting retraining. For example, the technique discussed in Aberdeen et al.: The Learning Behind Gmail Priority Inbox may be used, in which a global pre-trained supervised model (e.g., the machine learning model) is used in combination with a small onboard customer-specific reinforcement model (e.g., the second machine learning model).

In the following, an example of a flow of the proposed concept is provided. In the flow, the user approaches the car with their digital key, which is a UWB-enabled device, and the machine learning model predicts that the car should be unlocked based on the detected key location (x, y coordinates). However, due to the user carrying the digital key in their back pocket and being in a reflection-free environment (free field), the UWB signal strength is low, and the model's prediction of the key's location is slightly off. As a result, the car does not unlock automatically, and the user has to manually unlock the car. The active learning component detects the discrepancy between the predicted action (unlock) and the actual user action (manually unlocking the car) and based on this the approach can be labeled with "unlock intent" (implicit feedback). Optionally, the system promptly sends a message to the user over the RKE channel, requesting feedback on the correct action. The user provides the requested feedback, including the correct action (unlock) and additional information about the environment (explicit feedback). The user's feedback is then added to the training dataset, and the machine learning model is retrained to incorporate this new information. Simultaneously, the reinforcement learning algorithm evaluates the model's performance based on the reward function, which considers factors such as the accuracy of the predicted action, the deviation from the actual digital key location, and the user's feedback. The reinforcement learning algorithm adjusts the model's internal parameters to improve its performance in similar scenarios where the UWB signal strength is low due to the device being covered by the user's body and the user being in a reflection-free environment. This allows the model to adapt and provide more accurate predictions in the future.

The adapted machine learning model can be coupled to a specific digital key ID, making it available only for that individual user. Furthermore, the adapted machine learning model can be coupled to a specific digital key ID, making it available only for that individual user.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

### References

- 5: Key device
- 5': Trajectory
- 10: Apparatus
- 20a-d: Short-distance communication transceiver
- 30a-b: Camera
- 40: GPS sensor
- 50: Backend server
- 100: Vehicle
- 210: Obtaining sensor data
- 220: Processing the sensor data
- 230: Triggering vehicle functionality
- 240: Obtaining feedback
- 250: (Re-)training a ML model

## Claims

1. An apparatus (10) for a vehicle (100), comprising:
interface circuitry (12) for obtaining sensor data of at least one localization sensor (20a-d, 30a-b, 40), the sensor data being indicative of a location of a key device of a user of the vehicle relative to the vehicle;
processor circuitry (14) configured to:
process the sensor data or data derived from the sensor data using a machine learning model to output a prediction on whether a vehicle functionality is to be triggered;
trigger the vehicle functionality based on the prediction;
obtain feedback from the user on whether the vehicle functionality was to be triggered given the sensor data processed by the machine learning model; and re-train at least a portion of the machine learning model or train a second machine learning model based on the sensor data or data derived from the sensor data and the feedback.

2. The apparatus according to claim 1, wherein at least a portion of the feedback is based on the user manually activating or deactivating the vehicle functionality contrary to the prediction of the machine learning model.

3. The apparatus according to one of the claims 1 or 2, wherein the processor circuitry is configured to prompt the user to provide feedback on the prediction, wherein at least a portion of the feedback is based on a response of the user to the prompt.

4. The apparatus according to one of the claims 1 to 3, wherein the machine learning model is a neural network, with the processor circuitry being configured to re-train a subset of layers of the machine learning model based on the feedback.

5. The apparatus according to claim 4, wherein the subset of layers are one or more user-specific or key device-specific layers of the machine learning model, with the remaining layers being user-agnostic layers of the machine learning model.

6. The apparatus according to claim 5, wherein the subset of layers are trained specifically based on feedback associated with a user or key device of the user of the vehicle, with the processor circuitry being configured to train separate one or more layers for the users or key devices of the users of the vehicle.

7. The apparatus according to one of the claims 1 to 3, wherein the second machine learning model is a neural network, with the processor circuitry being configured to train one or more layers of the second machine learning model based on the feedback, with the second machine learning model being operated in sequence with the machine learning model.

8. The apparatus according to claim 7, wherein the machine learning model is a user-agnostic machine learning model and the second machine learning model is a user-specific or key device-specific machine learning model
and/or wherein the one or more layers are trained specifically based on feedback associated with a user or key device of the user of the vehicle, with the processor circuitry being configured to train separate one or more layers for the users or key devices of the users of the vehicle.

9. The apparatus according to one of the claims 4 to 8, wherein the processor circuitry is configured to upload the one or more trained layers to a backend server, and/or to download the one or more layers from the backend server prior to training.

10. The apparatus according to one of the claims 1 to 9, wherein the processor circuitry is configured to continuously re-train the machine-learning model or train the second machine learning model using reinforcement learning, with the feedback being used to calculate the reward for the reinforcement learning,
and/or wherein the processor circuitry is configured to continuously re-train the machine-learning model or train the second machine learning model using supervised learning, with the feedback being used to determine labels to use for the supervised learning.

11. The apparatus according to one of the claims 1 to 10, wherein the sensor data comprises sensor data of a short-range communication transceiver, such as sensor data of an Ultra-WideBand transceiver or sensor data of a Bluetooth transceiver, and/or wherein the sensor data comprises sensor data of a satellite-based positioning sensor,
and/or wherein the sensor data comprises sensor data of a camera sensor.

12. The apparatus according to one of the claims 1 to 11, wherein the processor circuitry is configured to process the sensor data to determine a trajectory of the key device relative to the vehicle, and the machine learning model is trained to output the prediction based on the trajectory of the key device relative to the vehicle.

13. A vehicle comprising the apparatus according to one of the claims 1 to 12.

14. A method for a vehicle (100), comprising:
obtaining (210) sensor data of at least one localization sensor, the sensor data being indicative of a location of a key device of a user of the vehicle relative to the vehicle;
processing (220) the sensor data or data derived from the sensor data using a machine learning model to output a prediction on whether a vehicle functionality is to be triggered;
triggering (230) the vehicle functionality based on the prediction;
obtaining (240) feedback from the user on whether the vehicle functionality was to be triggered given the sensor data processed by the machine learning model; and
re-training (250) at least a portion of the machine learning model or train a second machine learning model based on the sensor data or data derived from the sensor data and the feedback.

15. A computer program having a program code for performing the method of claim 14, when the computer program is executed on a computer, a processor, or a programmable hardware component.
